# EUROPÄISCHE PATENTANMELDUNG

(11) **EP 1 990 880 A2**
(43) Veröffentlichungstag der Anmeldung: **12.11.2008**
(21) Anmeldenummer: 08154732.5
(22) Anmeldetag: 17.04.2008
(51) Int. Cl.: H02G 3/12, H02G 3/14

(54) **Steckdosen- und Schalter-Einbausystem**

(30) Priorität: 30.04.2007 DE 202007006295 U; 30.04.2007 DE 202007006293 U
(71) Anmelder: inprojal elektrosysteme GmbH, 06507 Gernrode (DE)
(72) Erfinder: Spielhoff, Peter, 44229 Dortmund (DE)
(74) Vertreter: Patentanwälte Freischem

(57) **Zusammenfassung**

Die Erfindung betrifft ein Einbausystem mit einem Montagerahmen (1), der mindestens eine Rahmenöffnung aufweist, welche ein Einbaufeld für eine Steckdose (3) oder einen Schalter oder ein ähnliches elektrisches Bauelement bildet, wobei an dem Montagerahmen (1) Befestigungselemente (13) zur Befestigung des Montagerahmens (1) in einer Einbauöffnung angeordnet sind. Aufgabe der Erfindung ist es, ein vereinfachtes und leicht zu montierendes Einbausystem der oben genannten Art zu schaffen.

Diese Aufgabe wird erfindungsgemäß dadurch gelöst, dass in den Montagerahmen (1) eine Zierblende (12) integriert ist, welche gegen den Randbereich der Einbauöffnung anliegt und im eingebauten Zustand des Einbausystems sichtbar ist.

## Beschreibung

### Technisches Gebiet

Die Erfindung betrifft ein Einbausystem mit einem Montagerahmen, der mindestens eine Rahmenöffnung aufweist, welche ein Einbaufeld für eine Steckdose oder einen Schalter oder ein ähnliches elektrisches Bauelement bildet, wobei an dem Montagerahmen Befestigungselemente zur Befestigung des Montagerahmens in einer Einbauöffnung angeordnet sind.

Die Erfindung betrifft ferner ein elektrisches Bauelement, insbesondere Steckdose, Schalter oder dergleichen, vorzugsweise zum Einbau mit dem genannten Einbausystem.

### Stand der Technik

Derartige Einbausysteme für elektrische Bauelemente wie Steckdosen oder Schalter sind aus dem Stand der Technik gut bekannt. Sie dienen üblicherweise dem Einbau der elektrischen Bauelemente in oder auf Wände von Gebäuden oder in Wände von Möbel o.ä. Bei Gebäudewänden werden die Einbauöffnungen für elektrische Bauelemente üblicherweise Unterputzdosen oder Hohlwanddosen gebildet. Bei Möbelwänden sind die Einbauöffnungen meist direkt in Holzplatten geschnitten, die die Möbelwand bilden.

Die Einbausysteme umfassen einen Montagerahmen, der meist aus Metallblech gefertigt ist. Dieser Blechrahmen wird durch Klemmelemente oder andere Befestigungsmittel in der Wand-Einbauöffnung fixiert. Die elektrischen Bauelemente werden an dem Montagerahmen befestigt, insbesondere hieran festgeschraubt. Passend zu den von außen sichtbaren Teilen der elektrischen Bauelemente werden Abdeckrahmen an dem Montagerahmen befestigt, welche die funktionalen Elemente des Montagerahmens abdecken. Die Abdeckrahmen haben eine optisch ansprechende, häufig weiße, glatte Oberfläche und verdecken die technisch-funktionalen Elemente des Montagerahmens, welche mit der Einbauöffnung zusammenwirken. Die Abdeckrahmen haben eine innere Öffnung, welche die Konturen der elektrischen Bauelemente mit geringem Spiel umgreifen.

Die herkömmlichen Einbausysteme umfassen eine Vielzahl von Teilen. Aufgrund der Vielzahl der Teile ist ihre Montage recht aufwendig.

### Darstellung der Erfindung

Aufgabe der Erfindung ist es, ein vereinfachtes und leicht zu montierendes Einbausystem der oben genannten Art zu schaffen.

Diese Aufgabe wird erfindungsgemäß dadurch gelöst, dass in den Montagerahmen eine Zierblende integriert ist, welche gegen den Randbereich der Einbauöffnung anliegt und im eingebauten Zustand des Einbausystems sichtbar ist.

Durch die Integration der Zierblende in den Montagerahmen lässt sich die Zahl der Teile des Einbausystems reduzieren. Herkömmliche Einbausysteme benötigen je nach Zahl der in einer Einbauöffnung anzuordnenden elektrischen Bauelemente einen Abdeckrahmen mit einem, zwei, drei oder mehr Aufnahmefeldern für elektrische Bauelemente. Diese Abdeckrahmen müssen in der Regel im Kunststoff-Spritzgießverfahren mit eigenen Spritzgießformen produziert werden. Durch die Integration der Zierblenden in den Montagerahmen entfällt die Notwendigkeit separater Abdeckrahmen. Auf die Produktion derartiger Bauteile kann somit vollständig verzichtet werden. Ebenfalls ist die Montage des Einbausystems dadurch erleichtert, dass nach der Befestigung des Montagerahmens keine weiteren Abdeckelemente angebracht werden müssen. Schließlich ermöglicht die Integration des Zierrahmens in den Montagerahmen eine sehr viel flachere Ausführung des Einbausystems. Die bekannten Abdeckrahmen weisen eine gewisse Mindestbauhöhe auf, um die Randbereiche der Montagerahmen vollständig abzudecken und gegebenenfalls Befestigungselemente wie Rasten oder Rastvorsprünge aufzunehmen. Bei der vorliegenden Erfindung bildet die integrierte Zierblende direkt die Abstützung des Montagerahmens gegenüber dem Randbereich der Einbauöffnung. Sie kann sehr flach und optisch ansprechend ausgebildet werden. Insbesondere beim Einbau des Montagerahmens in eine Möbelwand werden so störende Vorsprünge vermieden, die aus der Ebene der Möbelwand weit herausragen.

Bei einer praktischen Ausführungsform des Einbausystems werden die Befestigungselemente des Montagerahmens von Befestigungsklammern gebildet. Derartige Befestigungsklammern können beim Wandeinbau seitlich abgespreizt werden und sich gegen die Innenwand der Einbauöffnung abstützen. Beim Einbau in eine Platte, welche z.B. die Wand eines Möbelstücks bildet, können die Befestigungsklammern von der Rückseite der Platte in Richtung der Zierblende gezogen werden. Dies erfolgt in der Regel mit einem Schraubgewinde, welches beim Verschrauben eine axiale Verschiebung der Befestigungsklammern bewirkt. Die Befestigungsklammern hintergreifen einen Abschnitt der Platte und ziehen die Zierblende des Montagerahmens gegen den Randbereich der Einbauöffnung.

Bei einer weiteren praktischen Ausführungsform des Einbausystems ist auf der Rückseite des Montagerahmens mindestens ein Führungskörper angeordnet, der einen einseitig offenen Führungskanal aufweist. Der Führungskanal erstreckt sich vorzugsweise senkrecht zur Rückseite des Montagerahmens und dient der verschiebbaren Aufnahme der Montageklammer. Der Klemm-abschnitt der Montageklammer ragt aus dem offenen Führungskanal nach außen hervor. Wie erwähnt, weist eine Befestigungsklammer ein Innengewinde auf, in das eine Stellschraube eingreift. Durch Verschrauben der Stellschraube wird die Montageklammer in ihrem Führungskanal zur Zierblende des Montagerahmens hin gezogen. Dabei hintergreift die Montageklammer den rückseitigen Randbereich der Einbauöffnung und zieht den Zierrahmen gegen den vorderseitigen Randbereich der Einbauöffnung.

Ein Montagerahmen eines derartigen Einbausystems mit integrierten Führungskörpern mit Führungskanälen kann kostengünstig im Kunststoff-Spritzgießverfahren gefertigt werden. Mit einem einzigen Formwerkzeug kann folglich das wesentliche Bauteil für die Befestigung des Einbausystems an einer Wand gefertigt werden. Zusätzliche Abdeckelemente sind nicht mehr erforderlich. Die Montage ist einfach und zuverlässig zu bewerkstelligen. Die Führungskörper für die Montageklammern sind dabei unmittelbar gemeinsam mit der Zierblende an den Montagerahmen angeformt. Auf diese Weise integriert der Montagerahmen sowohl die technisch funktionellen Elemente für den Wandeinbau als auch die ästhetisch wirkenden, von außen sichtbaren Elemente der Zierblende in ein Bauteil.

Vorzugsweise sind auf der Rückseite des Montagerahmens mindestens zwei Führungskörper angeordnet. Ein derartiger Montagerahmen wird an zwei Positionen verklemmt und erhält im eingebauten Zustand eine hohe Stabilität. In Abhängigkeit von der Größe der Montagerahmen kann er auch mehr Führungskörper aufweisen.

In Bezug auf das elektrische Bauelement stellt sich die Aufgabe, dieses derart weiterzubilden, dass es an unterschiedliche ästhetische Ansprüche angepasst werden kann.

Hierzu wird ein elektrisches Bauelement vorgeschlagen, bei dem zumindest auf einem Abschnitt seiner in eingebautem Zustand von vorne sichtbaren Vorderseite ein flächiges Zierelement aufgebracht ist.

Mit anderen Worten weist das Bauelement eine Aufnahmefläche auf, auf die ein Zierelement in Form einer dünnen Materiallage mit einer vorgegebenen optischen Erscheinungsform aufgebracht ist. Ein derartiges Zierelement kann wesentliche Bereiche der von außen sichtbaren Vorderseite des elektrischen Bauelements abdecken. Das optische Erscheinungsbild des flächigen Zierelements dominiert folglich die Optik des Einbausystems. Das optische Erscheinungsbild des Zierelements kann sehr viel freier gewählt werden als die Optik der technisch funktionalen Elemente des Einbausystems. So kann beispielsweise das flächige Zierelement von einer Metallplatte oder einem Holzfurnier gebildet werden oder zumindest das optische Erscheinungsbild einer Metall- oder Holzoberfläche aufweisen. Auch jedes andere Flächenmaterial (Textilstoff, Kunststoff etc.) kann ein derartiges Zierelement bilden. Bei einem Einbau in Möbelwände ist insbesondere ein Zierelement bestehend aus einem Holzfurnier sinnvoll, welches dem Furnier der Möbelwand entspricht.

In der Praxis kann die Vorderseite des elektrischen Bauelements vorzugsweise einen Aufnahmeabschnitt aufweisen, der von mindestens einem umlaufenden, vorspringenden Rand umfasst ist. Der Rand kann als Rippe oder Wulst mit geringer Höhe ausgebildet sein. Bei einem vollflächigen Zierelement, beispielsweise auf der Vorderseite einer Schaltwippe, ist ein derartiger vorspringender Rand lediglich am Außenumfang vorzusehen. Bei einem Bauelement wie einer Steckdose kann ein derartiger Rand sowohl den Außenumfang als auch den Innenumfang, der an die Vertiefung der Steckdose angrenzt, umgeben.

Die Höhe des vorspringenden Randes kann in der Praxis der Höhe des flächigen Zierelements entsprechen. Auf diese Weise wird das flächige Zierelement von einem Rand der Vorderseite des Bauelements umgeben und schließt mit diesem bündig ab. Der Rand des Bauelements kann in der Praxis eine andere Farbe oder ein anderes optisches Erscheinungsbild aufweisen als das Zierelement. Der Rand kann in der Praxis recht schmal (z.B. 1 mm) ausgebildet sein. Das optische Erscheinungsbild des flächigen Zierelements wird dann an der Außenseite und ggf. an der Innenseite von einem dünnen Rand des Bauelements mit anderem optischen Erscheinungsbild umgeben. Durch diese Zweistoff-Optik wird das Gesamterscheinungsbild des Bauelements in eingebautem Zustand aufgewertet. Ferner schützt der Rand, der bündig mit der Oberfläche des Zierelements abschließen kann, vor einem unerwünschten Loslösen des Zierelements von dem Bauelement. Vorzugsweise ist das Zierelement auf den ihm zugeordneten Abschnitt der Vorderseite des Bauelements aufgeklebt. Es sind aber auch andere Befestigungsarten (z.B. Verrasten) möglich. Je nach Ausbildung des elektrischen Bauelements kann zumindest ein Abschnitt der Vorderseite, auf der das Zierelement aufgebracht wird und/oder der vorspringende Rand von einer dem Bauelement zugeordneten Abdeckung gebildet werden. Die Abdeckung kann entweder unmittelbar an dem Bauelement befestigt werden oder gemeinsam mit dem Bauelement an dem Montagerahmen befestigt werden. Das flächige Zierelement kann in diesem Fall auf den Vorderseitenabschnitt der Abdeckung aufgeklebt werden. Diese Lösung bietet sich im Fall von Steckdosen an. Um die Buchse mit den elektrischen Komponenten der Steckdose herum kann eine rahmenartige Abdeckung angebracht werden, deren Größe im wesentlichen der Größe der Vorderseite einer Schaltwippe eines Lichtschalters entspricht. Die rahmenartige Abdeckung weist den äußeren vorspringenden Rand auf. Ferner erstreckt sich von diesem äußeren vorspringenden Rand nach innen ein kurzer Vorderseitenabschnitt der Abdeckung. Auf diesen Vorderseitenabschnitt wird das flächige Zierelement aufgeklebt. Die Steckdose selbst weist einen innenliegenden Rand auf, der von dem flächigen Zierelement mit geringem Spiel umgriffen wird.

Wie weiter oben erwähnt, kann das flächige Zierelement aus beliebigen geeigneten Materialien sein. Beispielsweise können glänzende oder gebürstete Metallplatten verwendet werden. Es können Holzfurniere oder Kunststoffplatten zur Herstellung des Zierelements verwendet werden. Das Zierelement kann von einer Tapete oder einem Bodenbelag gebildet werden. Der letztgenannte Fall bietet sich für den Einbau elektrischer Bauelemente in Einbauöffnungen im Bodenbereich an. Das flächige Zierelement kann auch aus Gummi oder einem anderen Material mit hohem Reibkoeffizienten gebildet werden. Hierdurch erhöht sich die Griffigkeit der Vorderseite des Bauelements. Dies ist insbesondere dann vorteilhaft, wenn diese Vorderseite von der manuell zu betätigenden Schaltwippe eines Schalters gebildet wird.

### Kurze Beschreibung der Abbildungen der Zeichnungen

Eine praktische Ausführungsform der Erfindung wird nachfolgend unter Bezugnahme auf die beigefügten Zeichnungen beschrieben. Die Zeichnungen zeigen in:
- Fig. 1: eine schaubildliche Vorderansicht eines Einbausystems für elektrische Bauelemente;
- Fig. 2: eine schaubildliche Rückansicht des Einbausystems aus Fig. 1;

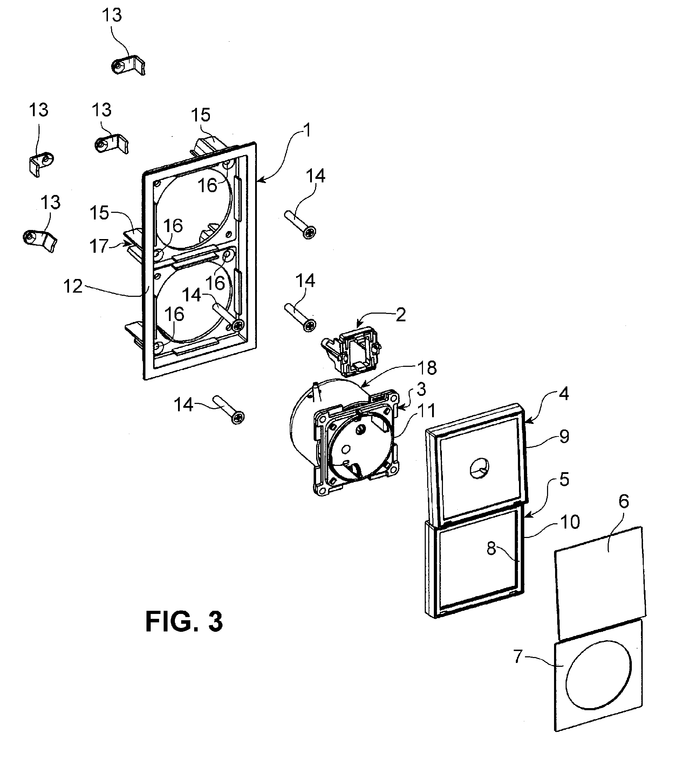

- Fig. 3: eine schaubildliche Explosionsdarstellung des Einbausystems aus den Fig. 1 und 2;
- Fig. 4: einen Längsschnitt des Einbausystems aus den Fig. 1 bis 3.

### Ausführungsformen der Erfindung

Das in den Zeichnungen dargestellte Einbausystem für elektrische Bauelemente weist einen Montagerahmen 1 sowie zwei Bauelemente 2, 3 auf. Das erste obere Bauelement 2 ist ein Schalter. Das zweite Bauelement ist eine Steckdose 3. Dem Schalter 2 zugeordnet ist eine Schaltwippe 4, welche mit einer Rastvorrichtung auf dem Schalter 2 befestigt ist. Der Steckdose 3 ist eine rahmenartige Abdeckung 5 zugeordnet, die durch Rastmittel am Montagerahmen 1 befestigt ist. Ein flächiges Zierelement 6 ist dazu bestimmt, auf die von außen sichtbare Vorderseite der Schaltwippe 4 des Schalters 2 aufgeklebt zu werden. Das flächige Zierelement 6 hat eine quadratische Form.

An ihrer Rückseite ist die Steckdose 3 mit einer Berührschutzdose 18 versehen. Die Berührschutzdose kann aber auch einstückig mit dem Montagerahmen sein (nicht dargestellt).

Ein weiteres flächiges Zierelement 7 ist dazu vorgesehen, in die rahmenförmige Abdeckung 5 eingeklebt zu werden. Die rahmenförmige Abdeckung 5 weist einen von ihrem äußeren Rand nach innen ragenden Steg 8 auf. Auf diesen umlaufenden Steg 8 wird der Rand des flächigen Zierelements 7 aufgeklebt.

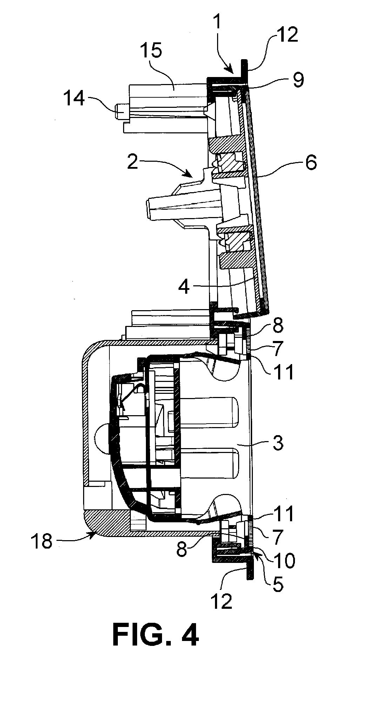

Sowohl die Schaltwippe 4 als auch die rahmenartige Abdeckung 5 für die Steckdose 3 weisen einen umlaufenden, vorspringenden Rand 9 bzw. 10 auf, der den Außenrand des flächigen Zierelements 6,7 umgibt. Die vorspringenden Ränder 9,10 sind insbesondere in der Fig. 4 zu erkennen. Es ist zu erkennen, dass sowohl bei der Schaltwippe 4 als auch bei der rahmenartigen Abdeckung 5 das flächige Zierelement 6 bzw. 7 nur mit dem Steg im Randbereich verklebt ist. Bei anderen Ausführungsformen ist aber auch eine vollflächige Verklebung oder eine Verklebung mit anderen Flächenabschnitten möglich. Der außen liegende vorspringende Rand 9,10 weist die gleiche Höhe wie das flächige Zierelement 6,7 auf. Die Vorderseite des flächigen Zierelementes 6,7 und des vorspringenden Randes 9,10 liegen folglich in einer Ebene und bilden eine geschlossene Fläche.

Insbesondere in Fig. 4 ist ebenfalls zu erkennen, dass die Steckdose 3 einen innen liegenden vorspringenden Rand 11 aufweist, der den Aufnahmeabschnitt für das flächige Zierelement innenseitig begrenzt und ebenfalls die gleiche Höhe wie das Zierelement 7 selbst aufweist.

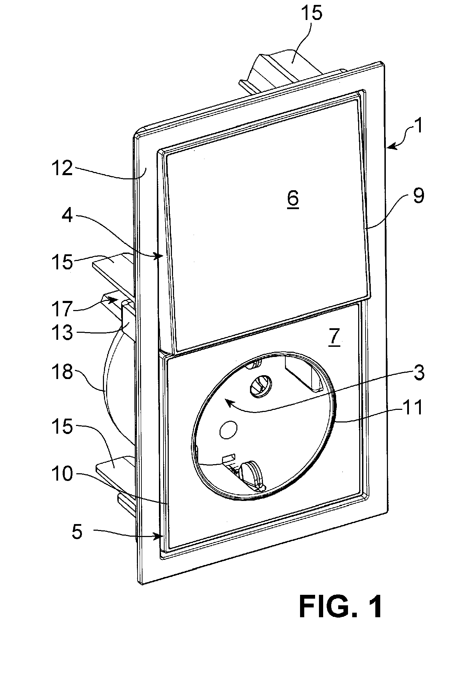

Die vorspringenden Ränder 9,10,11 der dem elektrischen Bauelement zugeordneten Teile können eine andere Farbe und/oder Oberflächenbeschaffenheit als die flächigen Zierelemente 6,7 aufweisen. Wie insbesondere in Fig. 1 ersichtlich, entsteht hierdurch bei geschlossener ebener Vorderfläche ein zweifarbiger Gesamteindruck des elektrischen Bauelements. Insbesondere kann das flächige Zierelement 6,7 in der Farbe und Oberflächenbeschaffenheit der angrenzenden Oberfläche der Wand angepasst werden, in der die Einbauöffnung für das Einbausystem angeordnet ist. Der optische Eindruck ist aber genau so vorteilhaft, wenn die Zierelemente 6,7 die gleiche Oberfläche wie die angrenzenden Bereiche des elektrischen Bauelements 2,3 oder des Montagerahmens 1 aufweisen. In diesem Fall wird die Optik durch die engen Spalte zwischen den Zierelementen 6,7 und den angrenzenden Bereichen aufgewertet.

Der Montagerahmen 1 kann die gleiche Oberflächenbeschaffenheit und Farbe aufweisen wie die Schaltwippe 4 und/oder die rahmenartige Abdeckung 5 und/oder die Steckdose 3. Die Farbe und Oberflächenbeschaffenheit dieser Bauteile können aber auch voneinander variieren, um einen variationsreicheren Gesamteindruck des Einbausystems hervorzurufen.

Das vorgeschlagene Einbausystem eignet sich insbesondere für die Montage in Möbelwänden. Um ein möglichst flach auf der Möbelwand aufliegendes Einbausystem zu schaffen, welches leicht montierbar ist, ist in den Montagerahmen 1 eine Zierblende 12 integriert. Der Montagerahmen 1 besteht aus einem spritzgegossenen Kunststoffteil. Die Zierblende ist ein integral (einstückig) in dem Kunststoffteil ausgebildeter Randabschnitt, der parallel zur Ebene der Wand verläuft, an der der Montagerahmen 1 befestigt werden soll.

Die integrierte Zierblende 12 weist in der dargestellten Ausführungsform eine Breite in der Ebene der Vorderseite der Zierblende von ca. 6 mm und eine Höhe senkrecht zu dieser Ebene von ca. 1,5 mm auf. Im eingebauten Zustand liegt diese Zierblende 12 flach gegen den Randbereich der Einbauöffnung an. Die Zierblende des Montagerahmens 1 ragt somit nur um 1,5 mm aus der Eben der Wand heraus, in deren Einbauöffnung der Montagerahmen 1 eingebaut ist.

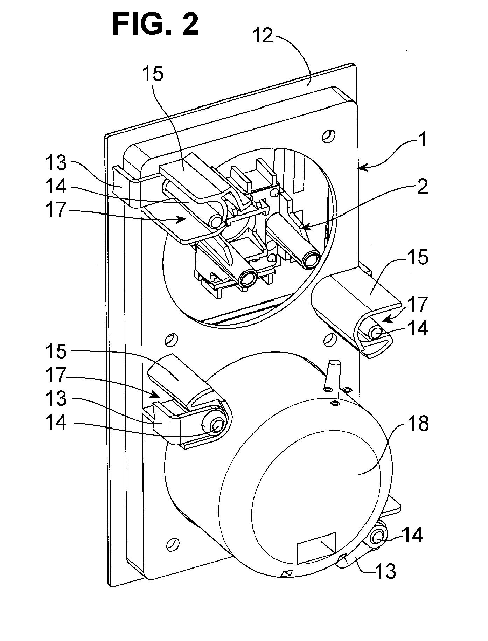

Zur Befestigung des Montagerahmens an einer Platte, welche z.B. eine Möbelwand bildet, wird ein insbesondere in Fig. 2 erkennbares System von Befestigungsklammern 13 verwendet. Die Befestigungsklammern 13 sind abgewinkelte Bauelemente, welche in ihrem parallel zur Vorderseite der Zierblende 12 verlaufenden Schenkel ein Innengewinde aufweisen und deren senkrecht zur Zierblende 12 verlaufender Schenkel zur Zierblende 12 hin gerichtet ist. In die Innengewinde der Befestigungsklammern 13 sind Stellschrauben eingeschraubt. An der Rückseite des Montagerahmens 1 sind Führungskörper 15 angeformt. Die Stellschrauben 14 durchragen Schraublöcher 16 in dem Montagerahmen 1 und verlaufen innerhalb eines offenen Führungskanals 17, der von dem Führungskörper 15 gebildet wird. In diesem Führungskanal 17 ist die Befestigungsklammer 13 senkrecht zur Ebene der Zierblende 12 verschiebbar. Durch Verschrauben der Stellschrauben 14 wird die Befestigungsklammer 13 in Richtung der Zierblende 12 verschoben. So wird ein zwischen der Befestigungsklammer 13 und der Zierblende 12 liegender Abschnitt der Wandplatte (nicht dargestellt) eingeklemmt, in der sich die Einbauöffnung für den Montagerahmen 1 befindet. Wie die Fig. 2 zeigt, sind auf der Rückseite des vorliegenden Montagerahmens 1 vier Führungskörper angeformt.

Bezugszeichenliste:
1 Montagerahmen
2 Schalter, Bauelement
3 Steckdose, Bauelement
4 Schaltwippe
5 rahmenartige Abdeckung
6 flächiges Zierelement
7 flächiges Zierelement
8 Steg
9 vorspringender Rand
10 vorspringender Rand
11 vorspringender Rand
12 Zierblende
13 Befestigungsklammer
14 Stellschrauben
15 Führungskörper
16 Schraublöcher
17 Führungskanal
18 Berührschutzdose

## Patentansprüche

1. Einbausystem mit einem Montagerahmen (1), der mindestens eine Rahmenöffnung aufweist, welche ein Einbaufeld für eine Steckdose (3) oder einen Schalter (2) oder ein ähnliches elektrisches Bauelement bildet, wobei an dem Montagerahmen (1) Befestigungselemente (13) zur Befestigung des Montagerahmens (1) in einer Einbauöffnung angeordnet sind, **dadurch gekennzeichnet, dass** in den Montagerahmen (1) eine Zierblende (12) integriert ist, welche gegen den Randbereich der Einbauöffnung anliegt und im eingebauten Zustand des Einbausystems sichtbar ist.

2. Einbausystem nach Anspruch 1, **dadurch gekennzeichnet, dass** die Befestigungselemente von Befestigungsklammern (13) gebildet werden.

3. Einbausystem nach Anspruch 1 oder 2, **dadurch gekennzeichnet, dass** auf der Rückseite des Montagerahmens (1) mindestens ein Führungskörper (15) angeordnet ist, der einen einseitig offenen Führungskanal (17) aufweist.

4. Einbausystem nach Anspruch 2 und 3, **dadurch gekennzeichnet, dass** der Führungskanal (17) senkrecht zur Rückseite des Montagerahmens (1) verläuft und dass in dem Führungskanal (17) eine Montageklammer (13) verschiebbar geführt ist, deren Klemmabschnitt aus dem offenen Führungskanal (17) nach außen hervorragt.

5. Einbausystem nach Anspruch 3 oder 4, **dadurch gekennzeichnet, dass** der Führungskörper (15) an den Montagerahmen (1) angeformt ist.

6. Einbausystem nach einem der Ansprüche 3 bis 5, **dadurch gekennzeichnet, dass** auf der Rückseite des Montagerahmens (1) mindestens zwei Führungskörper (15) angeordnet sind.

7. Elektrisches Bauelement (2,3), insbesondere für ein Einbausystem nach einem der vorangehenden Ansprüche, **dadurch gekennzeichnet, dass** zumindest auf einem Abschnitt seiner in eingebautem Zustand von vorne sichtbaren Vorderseite ein flächiges Zierelement (6,7) angeordnet ist.

8. Elektrisches Bauelement (2,3) nach Anspruch 7, **dadurch gekennzeichnet, dass** die Vorderseite des elektrischen Bauelements einen Aufnahmeabschnitt aufweist, der von mindestens einem umlaufenden, vorspringenden Rand (9,10,11) umgeben ist.

9. Elektrisches Bauelement (2,3) nach Anspruch 8, **dadurch gekennzeichnet, dass** die Höhe des vorspringenden Randes (9,10,11) der Höhe des flächigen Zierelementes (6,7) entspricht.

10. Elektrisches Bauelement (2,3) nach einem der Ansprüche 7 bis 9, **dadurch gekennzeichnet, dass** zumindest ein Abschnitt der Vorderseite und/oder der vorspringende Rand (10) des Bauelementes (3) von einer an dem Bauelement (3) befestigten Abdeckung (5) gebildet wird.

11. Elektrisches Bauelement (2,3) nach Anspruch 10, **dadurch gekennzeichnet, dass** das flächige Zierelement (7) auf den Vorderseitenabschnitt der Abdeckung (5) des elektrischen Bauelements (3) aufgeklebt ist.
